(19) Europäisches Patentamt
European Patent Office
Office européen des brevets

(11) **EP 4 166 404 A1**

(12) **EUROPEAN PATENT APPLICATION**

(43) Date of publication:
**19.04.2023 Bulletin 2023/16**

(21) Application number: **22196204.6**

(22) Date of filing: **16.09.2022**

(51) International Patent Classification (IPC):
**B60T 17/22** $^{(2006.01)}$   **F16D 65/78** $^{(2006.01)}$
**B64D 13/00** $^{(2006.01)}$   **F16D 65/00** $^{(2006.01)}$
**F16D 66/00** $^{(2006.01)}$

(52) Cooperative Patent Classification (CPC):
**B60T 17/221; B64D 13/00; F16D 65/78;**
F16D 2065/783; F16D 2066/001

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2021 US 202117503084**

(71) Applicant: **Collins Aerospace Ireland, Limited
T23 XN53 Cork City (IE)**

(72) Inventors:
• **FRANZINI, Giovanni**
  **Cork (IE)**
• **TORCHIO, Marcello**
  **Cork (IE)**

(74) Representative: **Dehns
St. Bride's House
10 Salisbury Square
London EC4Y 8JD (GB)**

(54) **SYSTEMS AND METHODS FOR CONTROLLING EXTERNAL BRAKE COOLING APPARATUS ACCORDING TO AIRCRAFT AND BRAKE STATUS**

(57) A brake cooling system (200) of the present disclosure includes an external cooling apparatus (220) located externally from an aircraft (100) (e.g., available on the ground at the gate during parking of the aircraft). The external cooling apparatus (220) is in electronic communication with the aircraft (100) via a communication channel (222) such that the external cooling apparatus (220) receives live data from the aircraft (100) for intelligent aircraft brake cooling. The live data includes measured brake temperature. The brake cooling system (200) further includes a controller for collecting aircraft data and generating a cooling apparatus control signal.

**FIG. 2**

# Description

## TECHNICAL FIELD

In general, the arrangements disclosed herein relate to cooling systems for brakes. More specifically, they relate to systems and methods for aircraft brake cooling.

## BACKGROUND

Brakes such as in aircraft or other vehicles or machines comprise components that can become hot during use. This heat can cause damage or wear to the brake components and thus affect the effectiveness of the brakes. Cooling systems are known to cool or prevent overheating of the brake components. Conventional cooling systems are controlled e.g. using a simple on/off control such as manual switching on and off cooling fans by the pilot or ground crew.

## SUMMARY

According to an aspect, an aircraft brake cooling system is disclosed, comprising a temperature sensor disposed onboard an aircraft and configured to measure a temperature data of an aircraft brake, a controller in electronic communication with the temperature sensor, and an external cooling apparatus configured to provide cooling to the aircraft brake. The controller is in electronic communication with the external cooling apparatus. The controller is configured to receive the temperature data from the temperature sensor. The controller is configured to send a cooling apparatus control signal to the external cooling apparatus based upon the temperature of the brake.

In various embodiments, the controller is disposed onboard the aircraft. In various embodiments, the external cooling apparatus is located externally from the aircraft and the controller is disposed on the cooling apparatus. In various embodiments, the controller is further configured to receive aircraft data from an avionics unit, the aircraft data indicative of an expected departure time of the aircraft, and the controller is configured to send the cooling apparatus control signal to the external cooling apparatus further based upon the expected departure time of the aircraft. In various embodiments, the aircraft data is further indicative of an estimated taxi duration of the aircraft, and the controller is configured to send the cooling apparatus control signal to the external cooling apparatus further based upon the estimated taxi duration of the aircraft. In various embodiments, the external cooling apparatus comprises a fan. In various embodiments, the controller is further configured to obtain a wear rate profile for the aircraft brake indicative of wear rate in dependence on temperature. In various embodiments, the controller is configured to send the cooling apparatus control signal to the external cooling apparatus based upon both the temperature data of the aircraft brake and the wear rate profile. In various embodiments, the wear rate profile includes a maximum wear rate temperature value T_WEAR_MAX, being a temperature at which the wear rate is at a maximum, the controller further configured to compare the brake temperature with the maximum wear rate temperature value, and send the cooling apparatus control signal to the external cooling apparatus further based upon a result of the comparison. In various embodiments, the controller is configured to activate the external cooling apparatus if the brake temperature is less than the maximum wear rate temperature and the controller is configured to not activate the external cooling apparatus if the brake temperature is not less than the maximum wear rate temperature but is less than a predetermined maximum temperature value.

According to an aspect, a method for cooling an aircraft brake is disclosed, comprising receiving, with a control unit, a measured temperature of the aircraft brake, receiving, with the control unit, a plurality of aircraft parameter, generating, with the control unit, a cooling apparatus control signal based upon the measured temperature and the plurality of aircraft parameters, and sending, by the control unit, the cooling apparatus control signal to an external brake cooling apparatus, wherein the external brake cooling apparatus is disposed externally from an aircraft.

In various embodiments, the aircraft data is indicative of a time before departure. In various embodiments, the aircraft data is indicative of an expected taxi duration. In various embodiments, the method further comprises receiving, with the control unit, a wear rate profile for the aircraft brake indicative of wear rate in dependence on temperature. In various embodiments, the method further comprises generating, with the control unit, the cooling apparatus control signal based upon the wear rate profile. In various embodiments, the wear rate profile includes a maximum wear rate temperature value T_WEAR_MAX, being a temperature at which the wear rate is at a maximum, and the method further comprises comparing, with the control unit, the measured temperature with the maximum wear rate temperature value, and generating, with the control unit, the cooling apparatus control signal further based upon a result of the comparison.

According to an aspect, an external cooling apparatus for an aircraft brake is disclosed, comprising a controller configured to receive data from an aircraft, wherein the controller is configured to control operation of the external cooling apparatus based upon the data received from the aircraft. The controller is configured to receive updated data from the aircraft as the external cooling apparatus provides cooling to the aircraft brake.

In various embodiments, the external cooling apparatus is located externally from the aircraft and the controller is disposed onboard the external cooling apparatus. In various embodiments, the external cooling apparatus comprises a fan. In various embodiments, the data is indicative of at least one of an expected departure time of the aircraft, an estimated taxi duration of the aircraft, and a temperature of the aircraft brake. In various embodiments, the controller is configured to communicate with the aircraft via a wireless communication channel. In various embodiments, the controller is configured to obtain a wear rate profile for the aircraft brake indicative of wear rate in dependence on temperature, and the controller is configured to control operation of the external cooling apparatus based upon a temperature of the aircraft brake and the wear rate profile.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

BRIEF DESCRIPTION OF THE DRAWINGS

The accompanying drawings illustrate various embodiments employing the principles described herein and are a part of this specification. The illustrated embodiments are meant for description only, and they do not limit the scope of the claims, and in which:

FIG. 1A illustrates an aircraft having multiple landing gear and brakes, in accordance with various embodiments;
FIG. 1B is a block diagram of a brake control unit (BCU) of the aircraft of FIG. 1A, in accordance with various embodiments;
FIG. 2 is a schematic diagram of a brake cooling control system including an external brake cooling apparatus configured to receive a cooling apparatus control signal from a BCU onboard an aircraft;
FIG. 3 is a schematic diagram of a brake cooling control system including an external brake cooling apparatus configured to receive data from a BCU onboard an aircraft;
FIG. 4 is a schematic diagram of a brake cooling control system including an external brake cooling apparatus configured to receive data from an aircraft brake;
FIG. 5 is a generalized wear rate profile for carbon brakes; and
FIG. 6 shows an embodiment of an exemplary methodology which considers a typical wear rate profile for carbon brakes.

DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein described without departing from the scope of the disclosure. Thus, the detailed description herein is presented for purposes of illustration only and not of limitation.

Provided herein, according to various embodiments, are systems, methods, and devices for brake cooling, such as with an external cooling fan. While numerous details are included herein pertaining to aircraft components, such as brake components, the systems and methods disclosed herein can be applied to other systems with brakes and the like.

As used herein, "electronic communication" means communication of electronic signals with physical coupling (e.g., "electrical communication" or "electrically coupled") or without physical coupling and via an electromagnetic field (e.g., "inductive communication" or "inductively coupled" or "inductive coupling"). In this regard, "electronic communication," as used herein, includes wired and wireless communications (e.g., Bluetooth, TCP/IP, Wi-Fi, etc.).

Aircraft brakes may be cooled through fans, which can be either installed in the brake assembly or can be available on ground at the gate and are activated by an airport operator during parking. The second option is often preferred by airlines, since the installation of fans in the brake assemblies increase the aircraft weight with consequent increase in the fuel burn.

However, the adoption of external fans or, more in general, of an external cooling system, tends to prevent the use of cooling strategies aiming at minimizing the brake wear, since the cooling system has no access to measurements regarding brake temperature and other aircraft information useful for reducing the wear during taxi, such as expected departure time, estimated taxi duration, etc.

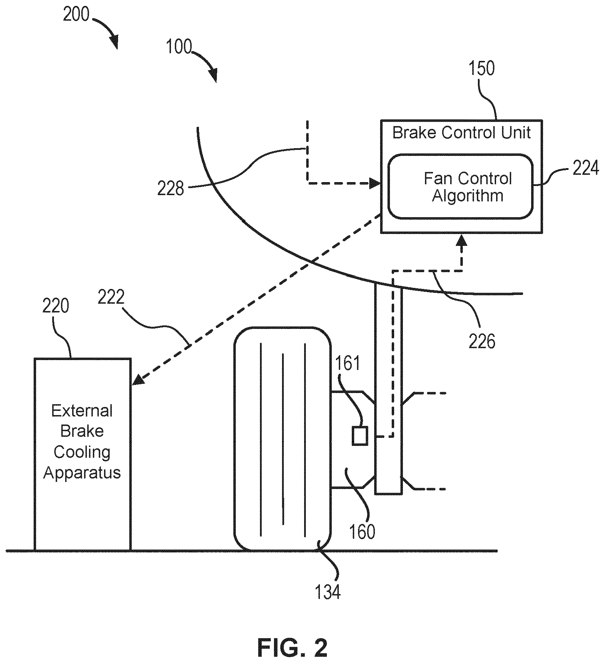

Brake cooling systems and methods, as disclosed herein, include an external cooling apparatus, such as a fan, controlled by the aircraft avionics, in accordance with various embodiments (e.g., see FIG. 2). The cooling apparatus control algorithm for the cooling apparatus may be executed by the aircraft avionics, for instance by the brake control unit (BCU). The BCU collects the information for the control algorithm and computes a control signal that is sent to the external cooling apparatus for regulating the external cooling apparatus, in accordance with various embodiments. In this regard, the present disclosure provides an external cooling apparatus capable of receiving information from the aircraft through a communication channel. Various embodiments are described with respect to an external cooling fan for cooling the brake, but other external brake cooling apparatus can be considered as well without departing from the scope of the present disclosure.

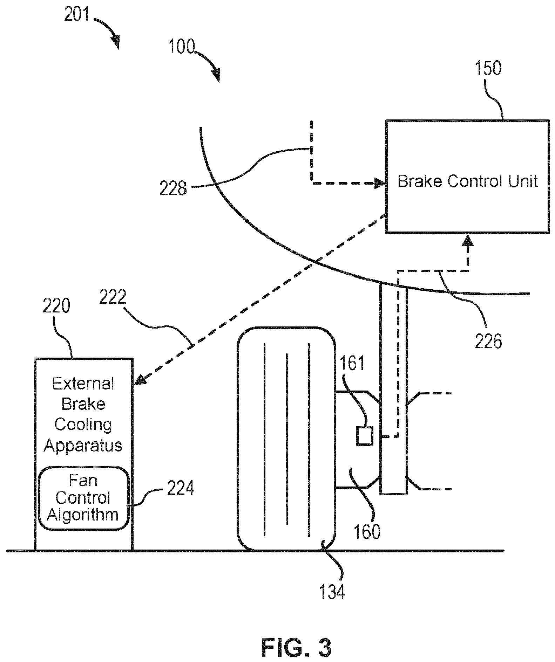

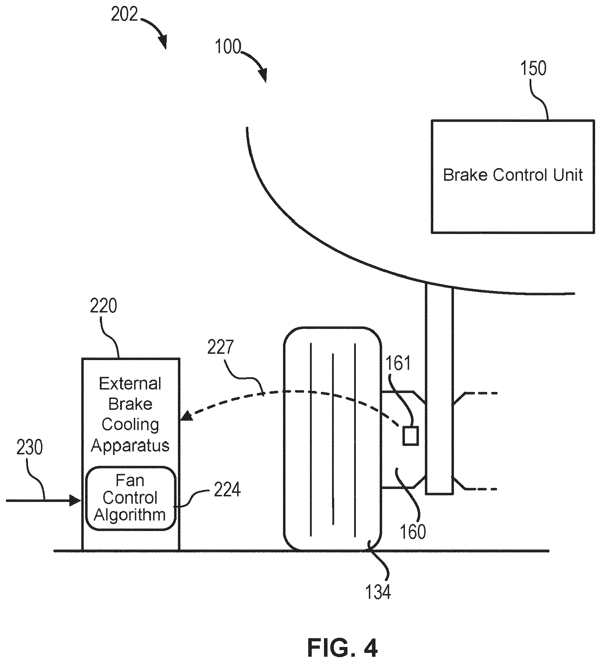

In various embodiments, as disclosed herein, the cooling apparatus control algorithm is executed in the external cooling apparatus control board (e.g., see FIG. 3). The aircraft avionics is then responsible for collecting the information for the cooling apparatus control algorithm and sends said information to the cooling apparatus, including platform specific parameters, such as brake material data. When the only measurement for the cooling apparatus control algorithm is the brake temperature, a simpler implementation may be utilized (see FIG. 4). In particular, the brake temperature sensor, or the remote data concentrator responsible for reading the sensor, may send directly to the cooling apparatus the current brake temperature. The control algorithm executed by the cooling apparatus can then use the received measurement to implement a wear minimization cooling strategy. Additional parameters may be desired in order to implement the control law, such as time left before next departure and brake discs material characteristics. This can be uploaded by the operator responsible for the external fan or the sensor or the remote data concentrator may provide these additional parameters to the external fan.

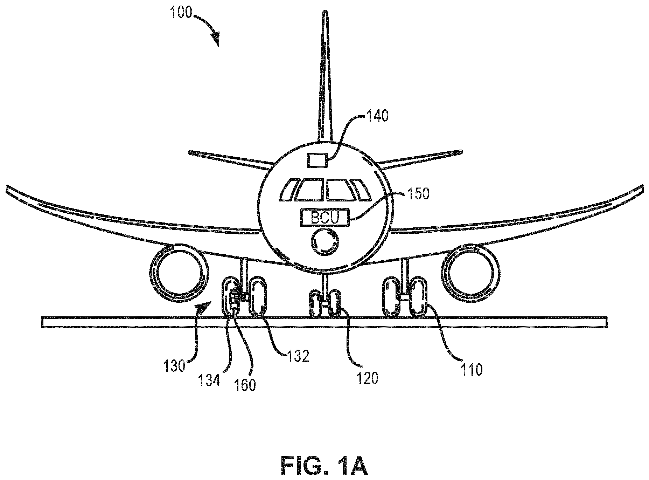

Referring now to FIG. 1A, an aircraft 100 includes multiple landing gear systems, including a first landing gear 110, second landing gear 120, and third landing gear 130. The first landing gear 110, second landing gear 120, and third landing gear 130 each include one or more wheel assemblies. For example, the third landing gear 130 includes an inner wheel assembly 132 and an outer wheel assembly 134. The first landing gear 110, second landing gear 120, and third landing gear 130 support the aircraft 100 when the aircraft 100 is not flying, thereby allowing the aircraft 100 to take off, land, and taxi without damaging the aircraft 100. In various embodiments, the second landing gear 120 is also a nose landing gear for the aircraft 100, and oftentimes, one or more of the first landing gear 110, second landing gear 120, and third landing gear 130 are operationally retractable into the aircraft 100 when the aircraft 100 is in flight and/or airborne.

In various embodiments, the aircraft 100 further includes an avionics unit 140, which includes one or more controllers (e.g., processors) and one or more tangible, non-transitory memories capable of implementing digital or programmatic logic. In various embodiments, for example, the one or more controllers are one or more of a general purpose processor, digital signal processor (DSP), application specific integrated circuit (ASIC), field programmable gate array (FPGA), or other programmable logic device, discrete gate, transistor logic, or discrete hardware components, or any various combinations thereof or the like. In various embodiments, the avionics unit 140 controls, at least various parts of, the flight of, and operation of various components of, the aircraft 100. For example, the avionics unit 140 controls various parameters of flight, such as an air traffic management systems, auto-pilot systems, auto-thrust systems, crew alerting systems, electrical systems, electronic checklist systems, electronic flight bag systems, engine systems flight control systems, environmental systems, hydraulics systems, lighting systems, pneumatics systems, traffic avoidance systems, trim systems, and the like.

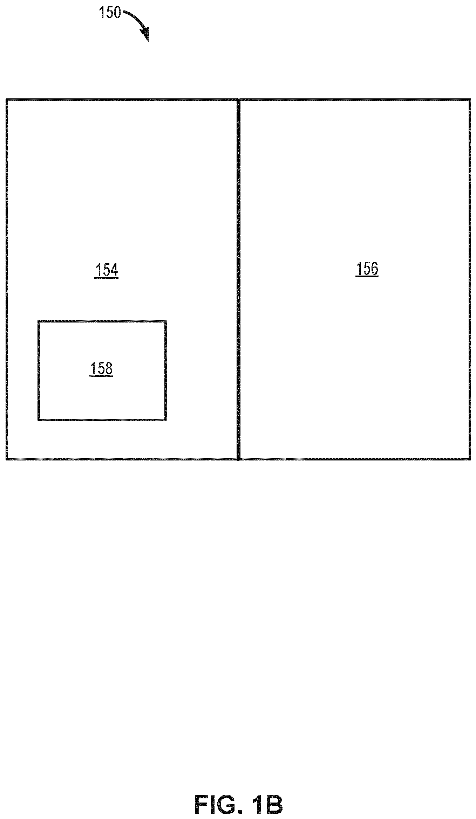

In various embodiments, the aircraft 100 further includes a BCU 150. With brief reference now to FIG. 1B, the BCU 150 includes one or more controllers 154 (e.g., processors) and one or more tangible, non-transitory memories 156 capable of implementing digital or programmatic logic. In various embodiments, for example, the one or more controllers 154 are one or more of a general purpose processor, DSP, ASIC, FPGA, or other programmable logic device, discrete gate, transistor logic, or discrete hardware components, or any various combinations thereof or the like, and the one or more memories 156 store instructions that are implemented by the one or more controllers 154 for performing various functions, such as monitoring a health status of a servo valve, as will be discussed herein. In various embodiments, the BCU 150 controls, at least various parts of, the braking of the aircraft 100. For example, the BCU 150 controls various parameters of braking, such as manual brake control, automatic brake control, antiskid braking, locked wheel protection, touchdown protection, park capability, gear retraction braking, and the like. The BCU 150 may further include hardware 158 capable of performing various logic using discreet power signals received from various aircraft systems.

Referring again more particularly to FIG. 1A, the aircraft 100 further includes one or more brakes coupled to each wheel assembly. For example, a brake 160 is coupled to the outer wheel assembly 134 of the third landing gear 130 of the aircraft 100. In operation, the brake 160 applies a braking force to the outer wheel assembly 134 upon receiving a brake command, such as from the BCU 150. In various embodiments, the outer wheel assembly 134 of the third landing gear 130 of the aircraft 100 comprises any number of wheels.

With reference to FIG. 2, a system 200 for controlling an external brake cooling apparatus according to current brake temperature and aircraft information is illustrated, in accordance with various embodiments. System 200 includes an external brake cooling apparatus 220 (also referred to herein as a cooling apparatus). Cooling apparatus 220 is configured to receive information from the aircraft 100 through a communication channel 222. Communication channel 222 may be wired or wireless. In this regard, BCU 150 may be in electronic communication with cooling apparatus 220. In various embodiments, cooling apparatus 220 is an external cooling fan configured to direct cooling air towards the aircraft brake. For example, cooling apparatus 220 may be a cooling fan positioned proximate each brake mechanism, such as an external or auxiliary unit that airport personnel may position proximate the landing gear at a gate following landing. In this regard, cooling apparatus 220 may be located externally (i.e., offboard and/or not mounted to the aircraft) from the aircraft 100. It is contemplated herein, however, that cooling apparatus 220 may be any suitable external brake cooling apparatus, including a fan, a liquid cooling apparatus, etc.

In various embodiments, cooling apparatus 220 is controlled by the aircraft 100. More particularly, BCU 150 may include a fan control algorithm 224 configured to receive brake measurements via communication channel 226. In this regard, BCU 150 may be in electronic communication with brake 160. For example, brake 160 may include one or more sensors (e.g., a temperature sensor 161) for providing temperature data to fan control algorithm 224. Said brake measurements may include brake temperature data. In this regard, fan control algorithm 224 may be configured to control cooling apparatus 220 based upon brake temperature.

Fan control algorithm 224 may be further configured to receive aircraft data via communication channel 228, for example from avionics unit 140 (see FIG. 1A). Said aircraft data may include data such as time before departure, expected taxi duration, etc. In this regard, BCU 150 may be in electronic communication with avionics unit 140 (see FIG. 1A). In this regard, fan control algorithm 224 may be configured to control cooling apparatus 220 based upon the expected time before departure and expected taxi duration. Fan control algorithm 224 may generate and send a cooling apparatus control signal (e.g., a fan speed signal) to cooling apparatus 220 via communication channel 222 based upon the information received via communication channel 226 and communication channel 228. Fan control algorithm 224 may generate and send a cooling apparatus control signal (e.g., a fan speed signal) to cooling apparatus 220 via communication channel 222 at predetermined intervals such that the cooling apparatus 220 is controlled with the use of "live" data from aircraft 100. In this regard, the communication channel 222 may provide cooling apparatus 220 with a flow of regularly updated data, for example every second, every few seconds, every minute, or any other suitable rate for providing accurate aircraft and brake data as the cooling apparatus 220 provides cooling to the aircraft brake.

In various embodiments, the data exchanged between the aircraft 100 and cooling apparatus 220 can be anonymized through the use of data anonymization techniques. In various embodiments, the data exchanged between the aircraft 100 and cooling apparatus 220 can be anonymized through the use of encryption. In this way, aircraft data remains protected even if communication channel 222 or cooling apparatus 220 are compromised.

With reference to FIG. 3, a system 201 for controlling an external brake cooling apparatus according to current brake temperature and aircraft information is illustrated, in accordance with various embodiments. System 201 may be similar to system 200 of FIG. 2, except that the fan control algorithm 224 is located onboard the cooling apparatus 220 instead of onboard the aircraft 100. In this regard, cooling apparatus 220 further includes fan control algorithm 224, which includes one or more controllers (e.g., processors) and one or more tangible, non-transitory memories capable of implementing digital or programmatic logic. In various embodiments, for example, the one or more controllers are one or more of a general purpose processor, digital signal processor (DSP), application specific integrated circuit (ASIC), field programmable gate array (FPGA), or other programmable logic device, discrete gate, transistor logic, or discrete hardware components, or any various combinations thereof or the like. In this regard, instead of sending a cooling device control signal, BCU 150 may send measurements for fan control (e.g., brake temperature, time before departure, expected taxi duration, etc.) to cooling apparatus 220 via communication channel 222. Fan control algorithm 224 may then use the measurements sent by BCU 150 to calculate a control signal (e.g., a fan speed signal) for controlling cooling apparatus 220.

With reference to FIG. 4, a system 202 for controlling an external brake cooling apparatus according to current brake temperature and aircraft information is illustrated, in accordance with various embodiments. System 202 may be similar to system 201 of FIG. 3, except that the fan control algorithm 224 receives brake data (e.g., brake temperature measurements) from brake 160 via communication channel 227 for controlling cooling apparatus 220. In this regard, brake 160 may comprise a controller (e.g., a microcontroller) configured to collect said brake data and send said brake data directly to cooling apparatus 220-bypassing BCU 150. In this manner, brake 160 may be in electronic communication with cooling apparatus 220.

In various embodiments, various fan control algorithm parameters 230 may be uploaded onto cooling apparatus 220 (e.g., saved into a non-transitory memory). Said fan control algorithm parameters 230 may include a brake wear rate profile, departure time, etc.). In this manner, fan control algorithm 224 may use parameters 230 and brake data (e.g., brake temperature measurements) received from brake 160 via communication channel 227 for calculating a cooling apparatus control signal (e.g., a fan speed control signal).

The rate of wear of brake components does not vary linearly with temperature. Various brake disks may have a different relationship between wear rate and temperature. However, there is a temperature at which the wear rate peaks and, beyond that temperature, wear rate decreases with increasing temperature, at least for a given range of temperature increase. For aircraft brakes, for example, it can be derived that directly after landing, when the brake temperature can be very high-e.g. in excess of 200°C (392°F)-it may not be advisable to cool the brakes as the brakes would have to pass through temperatures where the wear rate is substantially increased before ambient temperature is reached. This would result in significant wear during the taxiing phase.

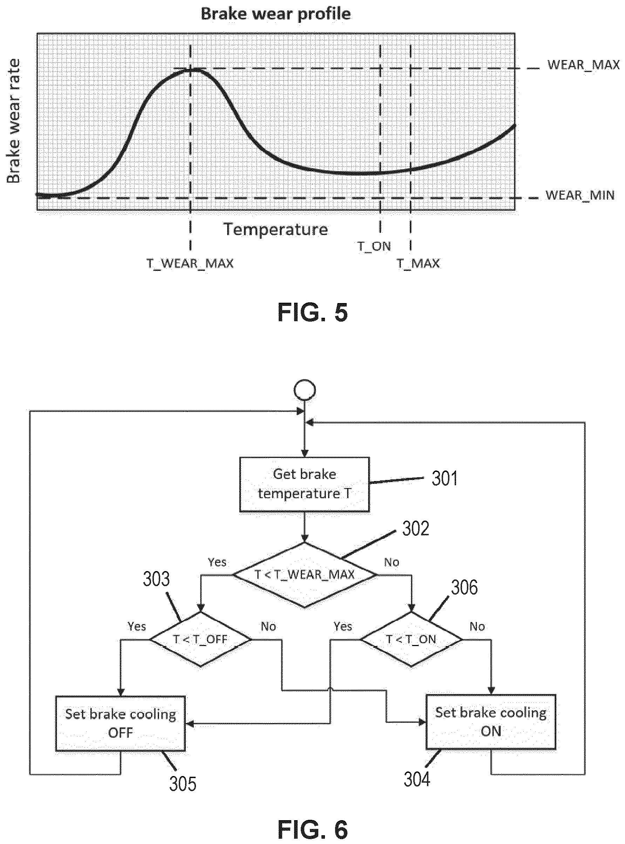

FIG. 5 through FIG. 6 of the present disclosure describes brake cooling methods by taking into account the relationship between brake wear rate and temperature, with the aim of minimizing wear rate while keeping temperature below a maximum threshold. In various embodiments, the brake cooling methods described with reference to FIG. 5 through FIG. 6 may be implemented by fan control algorithm 224 (see FIG. 2 through FIG. 4). However, it should be understood that fan control algorithm 224 (see FIG. 2 through FIG. 4) may implement any suitable brake cooling method without departing from the scope of the present disclosure.

In a simple form, the system and method of this disclosure determines the brake temperature and also uses the temperature for the brake in question at which the maximum wear rate occurs, $T_{\_WEAR\_MAX}$ as well as the maximum allowed brake temperature $T_{MAX}$. $T_{\_WEAR\_MAX}$ can be identified from the wear rate profile. $T_{\_MAX}$ can be set by the pilot according to departure regulations for safety and/or brake manufacturer suggestions (e.g. based on brake temperature operating range). The brake temperature is compared with $T_{\_WEAR\_MAX}$ and the cooling is controlled based on the comparison. The cooling system may also be controlled such that the brake temperature does not exceed $T_{MAX}$.

If the brake temperature is below $T_{\_WEAR\_MAX}$, but is still higher than desired, the brake cooling can be activated to bring the temperature down to a preferred low temperature.

If, on the other hand, the brake temperature is above $T_{\_WEAR\_MAX}$, the brake cooling should not be activated since reducing the temperature towards $T_{\_WEAR\_MAX}$ will result in an increase in wear rate.

If, however, the brake temperature is above $T_{\_WEAR\_MAX}$ but if not activating the cooling system would lead to the temperature reaching $T_{MAX}$, then the cooling should be activated to avoid excessive heating.

While the simplest form of the system controls cooling base on brake temperature, $T_{MAX}$, and $T_{\_WEAR\_MAX}$, a more accurate control can be provided by taking additional factors into account defining the relationship between wear rate and temperature, and by means of models able to predict the brake temperature evolution.

Preferred embodiments will now be described with reference to the drawings.

Considering a single brake assembly equipped with its own active cooling system, where

- $w(T)$ is the brake wear rate as a function of its temperature T,
- $u$ is the control variable responsible for regulating the cooling system efficiency/operation,
- $f(T, u, ...)$ is a mathematical model describing the brake temperature evolution as a function of the same, of the cooling system efficiency/operation and of other variables,
- Tmax is the maximum allowed brake temperature,
- [t, t + thor] is the prediction horizon considered,

at each time instant t the method computes u(t) solving the following optimization problem:

$$\min_{u(t)} \int_{t}^{t+t_{\_hor}} w\big(T(\tau)\big)d\tau$$

With $\dfrac{d\tau}{dt} = f(T, u, ...)$

such that $(T(\tau) \leq T_{max}, \tau \in [t, t + t_{hor}]$

If it is not possible to keep the temperature below $T_{max}$, the active cooling system should be controlled such that the brake temperature is kept as low as possible.

The wear rate of carbon brakes may be characterized by a profile that is similar for all manufacturers, with a single peak occurring around 200°C (392°F) (or around 100°C (212°F) for some brake manufacturers). A generalization of carbon brakes wear rate profile is shown in FIG. 5, where the following quantities are shown:

- T_WEAR_MAX, the temperature at which the maximum brake wear rate occurs;
- T MAX, the maximum allowed temperature for the brake;
- T ON the temperature above which a cooling system should operate at its maximum efficiency in order to avoid reaching T MAX

A simple embodiment of an exemplary methodology which considers a typical wear rate profile for carbon brakes is presented in FIG. 6. In this simple embodiment, it is only necessary to know T_WEAR_MAX and either T MAX or, more preferred, as shown, T_ON.

The temperature T of the brake is determined at 301, using any known temperature measuring means, and/or estimation algorithms.

At 302, the temperature T is compared with T_WEAR_MAX

If the temperature T is below T_WEAR_MAX (Yes), the cooling can be activated (brake cooling ON). In the embodiment shown in FIG. 6, if the temperature T is below TWEAR MAX, it is first determined, at 303, if the temperature T is below T OFF which is a predetermined temperature threshold at which the cooling system is switched off because the desired temperature has been reached. In an example, this can be set at ambient temperature, although other values can be set. If the temperature is above T_OFF, (No), the brake cooling system is activated or switched on at 304. If the temperature is already below T_OFF, the brake cooling is set to OFF at 305. Moving from T_WEAR_MAX to the left of the graph of FIG. 5 reduces wear rate.

If, at 302, it is determined that the temperature T is greater than T_WEAR_MAX, the brake cooling should not be switched on unless temperature T is, or is approaching the maximum permitted temperature T MAX. This is because, as can be seen in FIG. 5, switching on cooling would move to the left in the graph on FIG. 5 towards the peak T_WEAR_MAX, thus increasing wear rate. In the embodiment shown, if the temperature T is not less than T_WEAR_MAX (No), and is also less than T ON (306, Yes), then the cooling is set to OFF (305). If, however, T is not less than T WEAR MAX but is also not less than T_ON - i.e. is approaching T_MAX, (306, NO), then the cooling should be set to ON to avoid reaching T MAX

Preferably, the temperature T continues to be measured, or is measured at periodic intervals, for continuous or regular control of the brake cooling.

In various embodiments, if the wear rate profile of the brake is unknown, it may be learned by processing measurements and information collected by the avionics systems and/or by the brake assembly sensors. The information processed can include brake temperature evolution, readings of the electronic wear pin, applied brake pressure, whether the aircraft was taxiing or landing, etc.

While the specific examples above have been for carbon brake disks used in aircraft, the principles of the disclosure can be applied to other types of brakes.

In contrast to the conventional control of brake cooling systems which are based on keeping temperature to the minimum desired temperature, the present disclosure allows the control of the cooling system and, hence, the brake temperature to not only prevent overheating, but also to minimize break wear using a simple algorithm. In its simplest form, the algorithm may require only three parameters.

In addition, with the present disclosure, the cooling system is only activated where needed, thus resulting in energy savings.

In various embodiments, if the brake wear rate profile is unknown, it can be derived by means of learning algorithms processing information collected by brake assembly sensors and by aircraft avionics systems.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one, and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B, and C may be present in a single embodiment; for example, A and B, A and C, B and C, or A and B and C. Different cross-hatching is used throughout the figures to denote different parts, but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are only illustrated in the figures to help to improve understanding of embodiments of the present, representative disclosure.

Any reference to attached, fixed, connected, or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas, but not necessarily to denote the same or different materials. In some cases, reference coordinates may be specific to each figure.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments, whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements, but it may also include other elements not expressly listed or inherent to such process, method, article, or apparatus.

## Claims

1. An aircraft brake cooling system, comprising:

   a temperature sensor disposed onboard an aircraft and configured to measure a temperature data of an aircraft brake;
   a controller in electronic communication with the temperature sensor; and
   an external cooling apparatus configured to provide cooling to the aircraft brake;
   wherein the controller is in electronic communication with the external cooling apparatus;
   the controller is configured to receive the temperature data from the temperature sensor; and
   the controller is configured to send a cooling apparatus control signal to the external cooling apparatus based upon the temperature data of the aircraft brake.

2. The aircraft brake cooling system of claim 1, wherein the controller is disposed onboard the aircraft.

3. The aircraft brake cooling system of claim 1, wherein the external cooling apparatus is located externally from the aircraft and the controller is disposed on the external cooling apparatus.

4. The aircraft brake cooling system of claim 1, 2 or 3, wherein the controller is further configured to receive aircraft data from an avionics unit, the aircraft data indicative of an expected departure time of the aircraft, and the controller is configured to send the cooling apparatus control signal to the external cooling apparatus further based upon the expected departure time of the aircraft.

5. The aircraft brake cooling system of claim 4, wherein the aircraft data is further indicative of an estimated taxi duration of the aircraft, and the controller is configured to send the cooling apparatus control signal to the external cooling apparatus further based upon the estimated taxi duration of the aircraft.

6. The aircraft brake cooling system of any preceding claim, wherein the external cooling apparatus comprises a fan.

7. The aircraft brake cooling system of any preceding claim, wherein the controller is further configured to obtain a wear rate profile for the aircraft brake indicative of wear rate in dependence on temperature;

   the controller is configured to send the cooling apparatus control signal to the external cooling apparatus based upon both the temperature data of the aircraft brake and the wear rate profile; and
   the wear rate profile includes a maximum wear rate temperature value T WEAR MAX, being a brake temperature at which the wear rate is at a maximum, the controller further configured to compare the temperature data of the aircraft brake with the maximum wear rate temperature value, and send the cooling apparatus control signal to the external cooling apparatus further based upon a result of the comparison.

8. The aircraft brake cooling system of claim 7, wherein the controller is configured to activate the external cooling apparatus if the brake temperature is less than the maximum wear rate temperature and the controller is configured to not activate the external cooling apparatus if the brake temperature is not less than the maximum wear rate temperature but is less than a predetermined maximum temperature value.

9. A method for cooling an aircraft brake, comprising:

   receiving, at a control unit, a measured temperature of the aircraft brake;
   receiving, at the control unit, a plurality of aircraft parameters;
   generating, by the control unit, a cooling apparatus control signal based upon the measured temperature and the plurality of aircraft parameters; and
   sending, by the control unit, the cooling apparatus control signal to an external brake cooling apparatus, wherein the external brake cooling apparatus is disposed externally from an aircraft.

10. The method of claim 9, wherein the plurality of aircraft parameters is indicative of a time before departure and wherein, optionally, the plurality of aircraft parameters is indicative of an expected taxi duration.

11. The method of claim 9 or 10, further comprising receiving, with the control unit, a wear rate profile for the aircraft brake indicative of wear rate in dependence on temperature and, optionally, further comprising generating, with the control unit, the cooling apparatus control signal based upon the wear rate profile.

12. The method of claim 11, wherein the wear rate profile includes a maximum wear rate temperature value T_WEAR_MAX, being a temperature at which the wear rate is at a maximum, the method further comprising:

   comparing, with the control unit, the measured temperature with the maximum wear rate temperature value; and
   generating, with the control unit, the cooling apparatus control signal further based upon a result of the comparison.

13. An external cooling apparatus for an aircraft brake, comprising:

   a controller configured to receive data from an aircraft;
   wherein the controller is configured to control operation of the external cooling apparatus based upon the data received from the aircraft; and
   the controller is configured to receive updated data from the aircraft as the external cooling apparatus provides cooling to the aircraft brake.

14. The external cooling apparatus of claim 13, wherein the external cooling apparatus is located externally from the aircraft and the controller is disposed onboard the external cooling apparatus; and/or
   wherein the external cooling apparatus comprises a fan.

15. The external cooling apparatus of claim 13 or 14, wherein:

   the data is indicative of at least one of an expected departure time of the aircraft, an estimated taxi duration of the aircraft, and a temperature of the aircraft brake; and/or
   the controller is configured to communicate with the aircraft via a wireless communication channel; and/or
   the controller is configured to obtain a wear rate profile for the aircraft brake indicative of wear rate in dependence on temperature; and the controller is configured to control operation of the external cooling apparatus based upon a temperature of the aircraft brake and the wear rate profile.

FIG. 1A

FIG. 1B

FIG. 2

FIG. 3

**FIG. 4**

**Brake wear profile**

## FIG. 5

## FIG. 6

Europäisches
Patentamt

European
Patent Office

Office européen
des brevets

# EUROPEAN SEARCH REPORT

Application Number

EP 22 19 6204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/239173 A1 (KIRKBRIDE DAVID W [US]) 5 August 2021 (2021-08-05) | 1,2,9 | INV. B60T17/22 F16D65/78 B64D13/00 F16D65/00 |
| A | * paragraphs [0006], [0007], [0027], [3341], [0043]; figures 1-4 * | 3-8, 10-15 | |
| X | US 2019/301554 A1 (HOSAMANE SOMASHEKHAR M MAHESWARAPPA [IN] ET AL) 3 October 2019 (2019-10-03) | 1,2,9 | ADD. F16D66/00 |
| A | * paragraphs [0004], [0005], [0006], [0015], [0038] - [0041]; figures 1-4 * | 3-8, 10-15 | |
| X | CN 211 441 869 U (XIAN AVIATION BRAKE TECH CO LTD) 8 September 2020 (2020-09-08) | 1,3,6,9, 13,14 | |
| A | * paragraphs [0001] - [0005], [0009] - [0013], [0039], [0053] - [0062]; figures 1-6 * | 2,4,5,7, 8,10-12, 15 | |
| X | EP 3 101 277 B1 (AIRBUS OPERATIONS LTD [GB]) 13 May 2020 (2020-05-13) | 1,3,6,9, 13,14 | |
| A | * paragraphs [0001], [0007] - [0010], [0038] - [0045]; figures 1-5 * | 2,4,5,7, 8,10-12, 15 | TECHNICAL FIELDS SEARCHED (IPC) |
| X,P | EP 4 011 723 A2 (AIRBUS OPERATIONS LTD [GB]) 15 June 2022 (2022-06-15) | 1,2,4,6, 9,10, 13-15 | B60T F16D B64C B64D |
| A,P | * paragraphs [0003] - [0013], [0044] - [0048], [0060], [0064], [0077]; figures 1-5 * | 3,5,7,8, 11,12 | |
| X,P | EP 3 936 396 A1 (GOODRICH CORP [US]) 12 January 2022 (2022-01-12) | 1,7-9, 11,12,15 | |
| A,P | * paragraphs [0005] - [0008], [0019] - [0032]; figures 1-4 * | 2-6,10, 13,14 | |

The present search report has been drawn up for all claims

| Place of search | Date of completion of the search | Examiner |
|---|---|---|
| Munich | 21 February 2023 | Lopez, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 166 404 A1

## ANNEX TO THE EUROPEAN SEARCH REPORT
## ON EUROPEAN PATENT APPLICATION NO.

EP 22 19 6204

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2023

| Patent document cited in search report | | Publication date | Patent family member(s) | | Publication date |
|---|---|---|---|---|---|
| US 2021239173 | A1 | 05-08-2021 | NONE | | |
| US 2019301554 | A1 | 03-10-2019 | NONE | | |
| CN 211441869 | U | 08-09-2020 | NONE | | |
| EP 3101277 | B1 | 13-05-2020 | CN | 106246771 A | 21-12-2016 |
| | | | EP | 3101277 A1 | 07-12-2016 |
| | | | GB | 2539035 A | 07-12-2016 |
| | | | US | 2016356331 A1 | 08-12-2016 |
| | | | US | 2019136926 A1 | 09-05-2019 |
| EP 4011723 | A2 | 15-06-2022 | CN | 114620011 A | 14-06-2022 |
| | | | EP | 4011723 A2 | 15-06-2022 |
| | | | GB | 2601791 A | 15-06-2022 |
| | | | US | 2022205503 A1 | 30-06-2022 |
| EP 3936396 | A1 | 12-01-2022 | EP | 3936396 A1 | 12-01-2022 |
| | | | US | 2022009621 A1 | 13-01-2022 |

EPO FORM P0459

For more details about this annex : see Official Journal of the European Patent Office, No. 12/82

17